# EUROPEAN PATENT APPLICATION

(11) **EP 2 472 395 A1**
(43) Date of publication of application: **04.07.2012**
(21) Application number: 11196030.8
(22) Date of filing: 29.12.2011
(51) Int. Cl.: G06F 9/445

(54) **Booting from a data card**

(30) Priority: 31.12.2010 CN 201010618370
(71) Applicant: Huawei Device Co., Ltd., Longgang District Shenzhen Guangdong 518129 (CN)
(72) Inventor: Ou, Bitao, Shenzhen Guangdong 518129 (CN)
(74) Representative: Thun, Clemens

(57) **Abstract**

The present invention discloses a method for a data card to report a port, including: initializing a power-on startup module and a compact disk (CD) reporting and processing module in the boot phase, where the CD reporting and processing module is configured to report a data card as a CD, interact with a terminal, and realize CD reading; and reporting a data card as a CD to a terminal in the boot phase. The data card is reported as a CD after initialization of the power-on startup module and the CD reporting and processing module, rather than after the initialization of the power-on startup module in the boot phase and the user application modules in the network access phase. In this way, the terminal user can quickly find that the data card is reported as a CD after the data card is inserted, which improves the user experience.

## Description

### FIELD OF THE INVENTION

The present invention relates to the field of communications, and more particularly, to a data card.

### BACKGROUND OF THE INVENTION

A data card is a common card loaded with data. As long as it is inserted into a Universal Serial Bus (USB) slot in terminals such as mobile phones and computers, activities such as wireless Internet access, high-speed wireless data transfer, email sending/receiving, and Internet surfing can be done. When a data card is used with terminals such as mobile phones and computers, a driver is required so that the terminals such as mobile phones and computers can recognize and use the data card. Currently, data cards are mainly used in two ways: First, each data card is provided with a driver compact disc (CD). When a data card needs to be used on a terminal, a driver and an application need to be installed on the terminal through a CD, and then the data card can be correctly used. Because the driver and application need to be installed through a CD, the data card does not support Plug and Play. This usage is relatively rare at present due to its inconvenience. Second, a driver and an application are stored in a data card. When the data card is inserted into a terminal for the first time, the driver and application are installed on the terminal. When a data card is used for the first time, no driver or application is installed on the terminal, and the data card reports a port which is driven by a driver of the terminal, for example, a CD in a mass storage device. After that, the terminal loads the driver of the terminal to read and install the driver and application needed by the data card. After the driver and application needed by the data card are installed on the terminal, the data card is still reported as a CD and is switched to a normally used network access mode through information sent by the terminal. The normally used network access mode varies with different products, different requirements of operators, and different operating systems. For example, some operators require the use of a Personal Computer/Smart Card (PC/SC) port, while some other operators does not require this; some operators require the PC language port to implement the function of the PC language on the Microsoft Windows operating system rather than on the Linux or Mac operating system.

It can be known from the current implementation that, before a data card is reported as a CD on the device or is switched to the network access mode, users cannot perceive the access process of the data card or perform operations on the data card. Therefore, the speed of reporting the data card as a CD and switching to the network access mode directly affects user experience.

### SUMMARY OF THE INVENTION

Embodiments of the present invention provide a data card, a method for a data card to report a port, and a method for starting a data card, to improve user experience of using a data card.

To achieve the preceding objective, an embodiment of the present invention provides a method for a data card to report a port including:
initializing a power-on startup module and a compact disk (CD) reporting and processing module in the boot phase, wherein the power-on startup module is a basic module configured to start a data card, and the CD reporting and processing module is configured to report a data card as a CD, interact with a terminal, and realize CD reading; and
reporting, to a terminal, a data card as a CD in the boot phase.

An embodiment of the present invention further provides a method for starting a data card, including:
in the boot phase, initializing a power-on startup module and a compact disk (CD) reporting and processing module, wherein the power-on startup module is a basic module configured to start a data card, and the CD reporting and processing module is configured to report a data card as a CD, interact with a terminal, and realize CD reading;
in the boot phase, reporting, to a terminal, the data card as a CD;
in the boot phase, receiving a port switching command sent by the terminal to the data card; and
in the network access phase, initializing user application modules and resources corresponding to a network access mode of the data card, and then switching the data card to the network access mode, wherein the user application modules comprises functional modules that perform the functions of a data card.

An embodiment of the present invention further provides a data card, including:
a boot unit, comprising a power-on startup module initialization function and a compact disk (CD) reporting and processing module initialization function, and configured to run both the initialization functions in the boot phase to initialize a power-on startup module and a CD reporting and processing module, wherein the power-on startup module is a basic module configured to start a data card, and the CD reporting and processing module is configured to run in the boot phase to report the data card as a CD to a terminal, interact with the terminal, and realize CD reading.
Compared with the prior art, the data card in the technical solution according to the embodiment of the present invention is reported, in the boot phase, as a CD after the initialization of the power-on startup module and the CD reporting and processing module, rather than after the initialization of both the power-on startup module in the boot phase and the user application modules in the network access phase. Thereby, the terminal user can quickly find that the data card is reported as a CD after the data card is inserted, which improves the user experience.

### BRIEF DESCRIPTION OF THE DRAWINGS

FIG. 1a and FIG. 1b are a flow chart of an interaction between a data card and a terminal;
FIG. 2 is a flow chart of a method for a data card to report a port according to a first embodiment of the present invention;
FIG. 3 is a flow chart of a method for starting a data card according to a second embodiment of the present invention; and
FIG. 4 is a schematic structural diagram of a data card according to a third embodiment of the present invention.

### DETAILED DESCRIPTION OF THE EMBODIMENTS

The following describes the technical solutions in the embodiments of the present invention clearly with reference to the accompanying drawings in the embodiments of the present invention. Apparently, the described embodiments are only some rather than all of the embodiments of the present invention. Other embodiments derived by those skilled in the art from the embodiments of the present invention shall fall within the protection scope of the present invention.

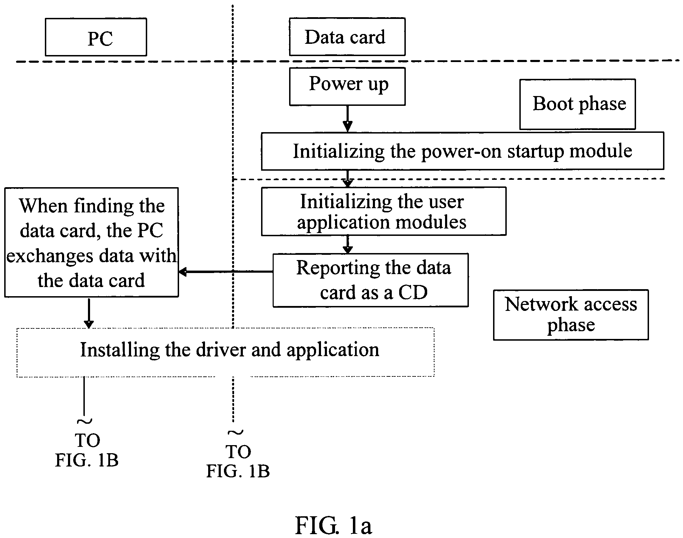

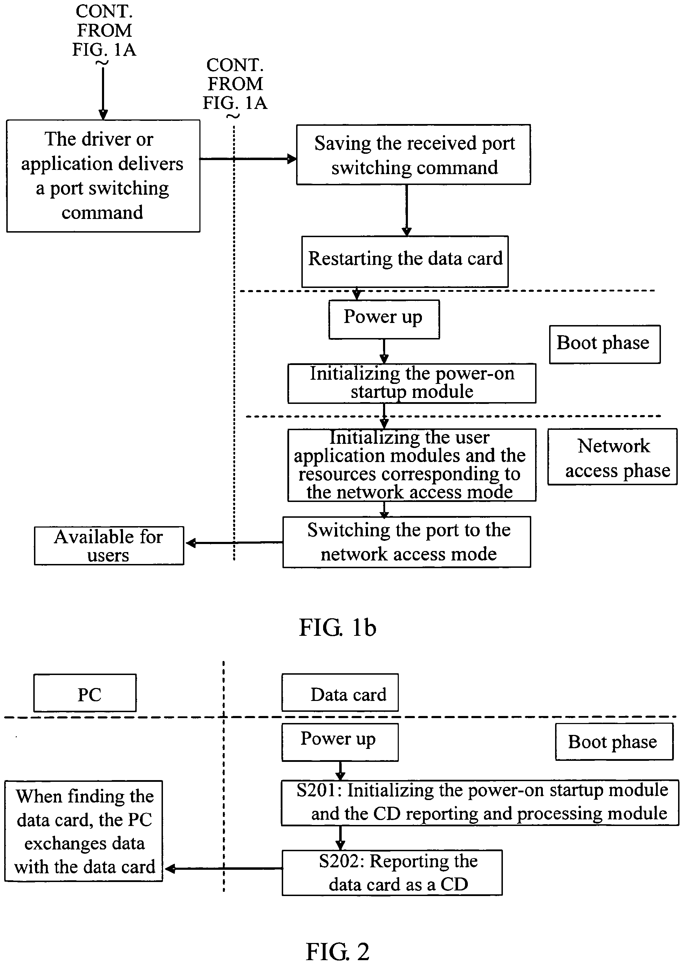

As shown in FIG. 1, the running of a data card includes two phases: a boot phase and a network access phase, which are respectively similar to a BIOS phase and a normal Windows phase of a PC. After a data card is inserted into a terminal and is powered on, the boot phase comes. In the boot phase, the power-on startup module (for example, a Flash memory) of the data card is initialized, and then the network access phase comes. The data card uses Advanced RISC Machines (ARM). After power-on, the data card enters the boot phase from the default initial address. In the boot phase, power-on startup modules, such as memory, Flash memory, and power management chip, are initialized. The initialization process of each module corresponds to at least one initialization function. In the boot phase, the initialization functions are executed one by one, for example:
SDRAM_init() -> flash_init() -> PMIC_init() ...

In a data card, modules such as memory, Flash memory, and power management chip must be initialized before subsequent modules run. If the memory module is not initialized, the memory cannot be used; if the Flash memory is not initialized, the configuration parameters in the Flash memory cannot be read; and if the power management chip is not initialized, the other modules such as SIM card cannot be powered. After all the functions in the boot phase are executed, the first function of the network access phase is executed, and then the network access phase comes.

In the network access phase, user application modules such as a radio frequency (RF) module are first initialized, and then the data card is reported to the terminal (for example, a PC) as a mass storage device. After that, the PC sends a Small Computer System Interface (SCSI) command to the mass storage device to obtain the configuration information of the mass storage device, and the data card returns the configuration information of a CD drive in response to the PC. After installing the CD driver matching the data card, the PC periodically sends an SCSI query command TEST UNIT READY (0x00). If the data card returns a state of execution failure, the PC immediately sends a command REQUEST SENSE (0x03) to query for a current state of the CD drive. After receiving REQUEST SENSE, the data card returns the state MEDIA_CHANGED in response. In this way, the PC interacts with the CD drive by using SCSI commands after the CD is inserted. The data card stores a mirror of the data installation CD in the Flash memory for access by the PC. From the angle of the PC, the data card is similar to a CD inserted into a CD drive, and the content of the CD is the same as that of the installation CD, where an installation program is included, and the installation program for running the data card is specified in AUTORUN.ini. In the Windows operating system, when a CD is inserted into the CD drive, the PC will execute the file specified in AUTORUN.ini. Through the preceding process, the driver and the application of the data card are automatically installed. When the installation is complete, the installation program or the installed application send a port switching command to instruct the data card to switch the port from the CD mode to the network access mode. The data card saves the port switching command in its memory. After saving the port switching command, the data card must be restarted to prepare resources so as to work in network access mode. It is possible that the resources are not initialized during the initialization of the power-on startup module and the application modules. After the restart, the power-on startup module, the user application modules, and the resources corresponding to network access mode are reinitialized. After the reinitialization, the port of the data card is switched to network access mode, and the information about the network access mode is stored in the Flash memory of the data card.

After the driver and application are installed, when the data card is reinserted, the data card is reported as a CD still after the initialization of the power-on startup module and the user application modules. After judging that the driver and application are installed, the PC sends a port switching command through the driver or applications to instruct the data card to switch to the network access mode. The data card saves the port switching command after receiving the port switching command. After saving the port switching command, the data card must restart to prepare resources so as to work in network access mode. After the restart, the power-on startup module, the user application modules, and the resources corresponding to the network access mode are reinitialized. After the reinitialization, the data card is switched to the network access mode, and the information about the network access mode is stored in the Flash memory of the data card. Before the data card can be normally used, its power-on startup module must be initialized twice in the boot phase, and its user application modules must be initialized twice in the network access phase.

A first embodiment of the present invention provides a method for a data card to report a port. As shown in FIG. 2, after the data card is powered on, the method includes:

Step S201: Initialize a power-on startup module and a CD reporting and processing module in the boot phase.

The power-on startup module is a basic module that runs in the boot phase to start the data card, excluding the user application modules that perform the functions of the data card, such as an RF module and network access module. What modules are included in the power-on startup module depends on the implementation of the related product. In the prior art, the power-on startup module may include a memory, a Flash memory, a power management chip, and so on.

The CD reporting and processing module runs in the boot phase to report, to a terminal, the data card as a CD, interact with the terminal, and realize CD reading. The CD reporting and processing module includes: a USB kernel, configured to realize reporting a USB port and processing basic USB commands in the boot phase, so as to enable a PC to enumerate USB devices and to perform normal USB interaction with the data card; and an SCSI command processor, configured to perform the interaction between the data card and the terminal, report a mass storage device as a CD, and realize CD reading.

The method for initializing the power-on startup module and the CD reporting and processing module is to run the initialization functions corresponding to the power-on startup module and the CD reporting and processing module one by one.

Step S202: Report, to the terminal, the data card as a CD in the boot phase.

The reporting, to the terminal, the data card as a CD in the boot phase includes: running the USB kernel to report a USB port to the terminal, running the SCSI command processor to report a mass storage device to the terminal, and interacting with the terminal by using an SCSI command to report the mass storage device as a CD.

After the data card is reported to the terminal as a CD, the terminal user can see the data card that is mapped to a CD.

It can be known that, in this embodiment of the present invention, the data card is reported as a CD after the initialization of the power-on startup module and the CD reporting and processing module in the boot phase, rather than after the initiatization of the power-on startup module in boot phase and the user application modules in the network access phase. In this way, the terminal user can quickly find that the data card is reported as a CD after the data card is inserted, which improves the user experience.

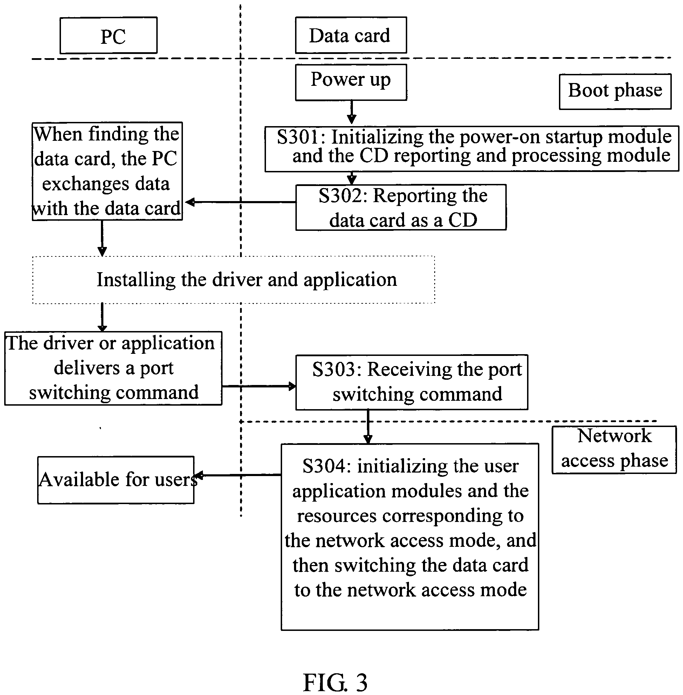

A second embodiment of the present invention provides a method for starting a data card. As shown in FIG. 3, the method includes:

Step S301: Initialize a power-on startup module and a CD reporting and processing module in the boot phase.

The power-on startup module is a basic module that runs in the boot phase to start the data card, excluding the user application modules that perform the functions of the data card, such as an RF module and a network access module. What modules are included in the power-on startup module depends on the implemention of the related product. In the prior art, the power-on startup module may include a memory, a Flash memory, a power management chip, and so on.

The CD reporting and processing module is configured to run in the boot phase to report, to a terminal, the data card as a CD, interact with the terminal, and realize CD reading. The CD reporting and processing module includes: a USB kernel, configured to realize reporting a USB port and processing basic USB commands in the boot phase, so as to enable a PC to enumerate USB devices and to perform normal USB interaction with the data card; and an SCSI command processor, configured to perform the interaction between the data card and the terminal, report a mass storage device as a CD, and realize CD reading.

The method for initializing the power-on startup module and the CD reporting and processing module is to run the initalization functions corresponding to the power-on startup module and the CD reporting and processing module one by one.

Step S302: Report, to the terminal, the data card as a CD in the boot phase.

The reporting, to the terminal, the data card as a CD in the boot phase includes: running the USB kernel to report a USB port to the terminal, running the SCSI command processor to report a mass storage device to the terminal, and interacting with the terminal by using SCSI commands to report the mass storage device as a CD.

Step S303: Receive a port switching command sent by a terminal to a data card in the boot phase.

The method for the terminal to send the port switching command to the data card includes: if the data card is inserted for the first time, and neither the driver nor the application of the data card is installed on the terminal, the terminal interacts with the data card (mapped to a CD) to realize the installation of the driver and the application of the data card on the terminal; when the installation is complete, the installation program or application sends a switching command to instruct the data card to switch to the network access mode; or

if the driver and the application of the data card is installed on the terminal, the installation program or application on the terminal sends a port switching command to instruct the data card to switch to the network access mode.

Further, step S301 includes initializing a port switching command module in the boot phase. The port switching command module includes a port switching command storage program, and is configured to, after receiving a port switching command from the terminal, run the port switching command storage program to save the port switching command in the data card for the use in initialization in the network access phase. The method for initializing the port switching command module is to run the initialization function corresponding to the port switching command module.

The interaction between the terminal and the CD, the installation of the driver and application of the data card, and the sending by the installation program or application the port switching command to instruct the data card to switch to the network access mode are already implemented in the prior art, which are not detailed here.

Step S304: In the network access phase, initialize the user application modules and the resources corresponding to the network access mode of a data card, and then switch the data card to the network access mode.

Information about the network access mode is saved in the Flash memory of the data card, which may be determined by operators. During the initialization in the network access phase, the information about the network access mode is read from the Flash memory according to the port switching command, and the corresponding resources are initialized.

The user application modules include the functional modules that perform the functions of the data card, such as an RF module and a network access module. During the product implementation of the present invention, the user application modules may include modules different from the preceding modules or even only some of the related functional modules, provided that the switching the data card to the network access mode in the present invention can be realized.

The resources corresponding to the network access mode of the data card include ports related to the network access mode. For example, if the network access mode of the data card is Network Driver Interface Specification (NDIS), the initialization in the network access phase must cover the initialization of NDIS ports.

The method for initializing the user application modules and the resources corresponding to the network access mode of the data card is to run the initialization functions corresponding to the user application modules and to the resources corresponding to the network access mode of the data card.

After the data card switches its port to the network access mode, the user can see the data card and use the services provided by the data card through the terminal.

The boot phase and network access phase of the data card correspond to different functions. After all the functions in the boot phase are executed, the first function of the network access phase is executed, and then the network access phase comes. The execution of the functions in the boot phase and the network access phase and the switching from the boot phase to the network access phase are already implemented in the prior art, which are not detailed.

It can be known that, in this embodiment of the present invention, the data card is reported as a CD after the initialization of the power-on startup module and the CD reporting and processing module in the boot phase, rather than after the initialization of the power-on startup module in the boot phase and the user application modules in the network access phase. In this way, the terminal user can quickly find that the data card is reported as a CD after the data card is inserted, which improves the user experience. In addition, the data card obtains the port switching command in the boot phase, initializes the resources corresponding to the network access mode while initializing the user application modules in the network access phase, and then completes the port switching, which avoids restart and improves the user experience.

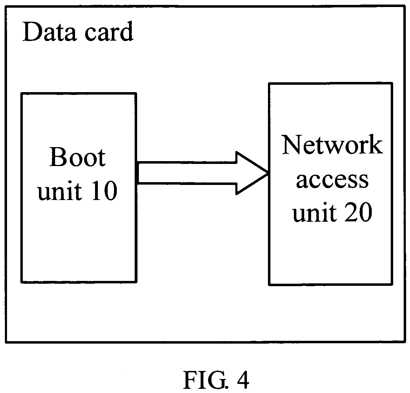

A third embodiment of the present invention provides a data card. As shown in FIG. 4, the data card includes:
a boot unit 10, including a power-on startup module initialization function and a CD reporting and processing module initialization function, and configured to run both the initialization functions in the boot phase to initialize the power-on startup module and the CD reporting and processing module.

The power-on startup module is a basic module configured to run in the boot phase to start the data card, excluding the user application modules that perform the functions of the data card, such as an RF module and a network access module. What modules are included in the power-on startup module depends on the implementation of the related product. In the prior art, the power-on startup module may include a memory, a Flash memory, a power management chip, and so on.

The CD reporting and processing module is configured to run in the boot phase to report the data card as a CD to a terminal, interact with the terminal, and realize CD reading. The CD reporting and processing module includes: a USB kernel, configured to realize reporting a USB port and processing basic USB commands of the data card in the boot phase, so as to enable a PC to enumerate USB devices and to perform normal USB interaction with the data card; and an SCSI command processor, configured to perform the interaction between the data card and the terminal, report a mass storage device as a CD, and realize CD reading.

The method for initializing the power-on startup module and the CD reporting and processing module is to run the initialization functions corresponding to the power-on startup module and the CD reporting and processing module one by one.

The repoarting, by the CD reporting and processing module, the data card as a CD to the terminal in the boot phase includes: running the USB kernel to report a USB port to the terminal, running the SCSI command processor to report a mass storage device to the terminal, and interacting with the terminal by using SCSI commands to report the mass storage device as a CD.

Further, the boot unit includes a port switching command module initialization function configured to run in the boot phase to initialize the port switching command module. The port switching command module includes a port switching command storage program configured to, after receiving the port switching command from the terminal, run to save the port switching command in the data card.

The method for initializing the port switching command module is to run the port switching command module initialization function.

The sending, by the terminal, the port switching command to the data card includes: if the data card is inserted for the first time, and neither the driver and nor the application of the data card are installed on the terminal, the terminal interacts with te data card (mapped to a CD) to install the driver and the application of the data card; when the installation is complete, the installation program or application sends a switching command to instruct the data card to switch to the network access mode; or
if the driver and the application of the data card is installed on the terminal, the installation program or application on the terminal sends a port switching command to instruct the data card to switch to the network access mode.

Further, the data card includes a network access unit 20, configured to switch the data card to the network access mode after the user application modules and the resources corresponding to the network access mode of the data card are initialized in the network access phase. The user application modules include the functional modules that perform the functions of the data card.

Information about the network access mode is saved in the Flash memory of the data card, which may be determined by operators. During the initialization in the network access phase, the network access mode is read from the Flash memory according to the port switching command, and the corresponding resources are initialized.

The user application modules include the functional modules that perform the functions of the data card, such as an RF module and a network access module.
the method for initializing the user application modules and the resources corresponding to the network access mode of the data card is to run the initialization functions corresponding to the user application modules and the resources corresponding to the network access mode of the data card.

After the data card switches its port to the network access mode, the user can see the data card and use the services provided by the data card through the terminal.

It can be known that, in this embodiment of the present invention, the data card is reported as a CD after the initialization of the power-on startup module and the CD reporting and processing module in the boot phase, rather than after the initialization of the power-on startup module in the boot phase and the user application modules in the network access phase. In this way, the terminal user can quickly find that the data card is reported as a CD after the data card is inserted, thereby improving the user experience. In addition, the data card obtains the port switching command in the boot phase, initializes the resources corresponding to the network access mode while initializing the user application modules in the network access phase, and completes the port switching, which avoids restart and improves the user experience.

It is to be understood by those skilled in the art that all or some processes of the methods provided in the preceding embodiments can be implemented by a program instructing related hardware, where the program can be stored in a readable storage medium, and during the running of the program, the processes of the foregoing methods according to the embodiments are included. The readable storage medium may be a magnetic disk, an optical disk, a Read-Only Memory (ROM), or a Random Access Memory (RAM).

The foregoing description is only the exemplary implementations of the present invention, and it should be noted that other variations and modifications may be made by those skilled in the art without departing from the principles of the present invention, and the variations and modifications shall fall within the scope of the present invention.

## Claims

1. A method for a data card to report a port, comprising:
initializing a power-on startup module and a compact disk (CD) reporting and processing module in the boot phase, wherein the power-on startup module is a basic module configured to start a data card, and the CD reporting and processing module is configured to report a data card as a CD, interact with a terminal, and realize CD reading; and
reporting, to a terminal, a data card as a CD in the boot phase.

2. The method according to claim 1, wherein the method for initializing the power-on startup module and the CD reporting and processing module is to run the initalization functions corresponding to the power-on startup module and the CD reporting and processing module one by one in the boot phase.

3. The method according to claim 1 or 2, wherein the CD reporting and processing module comprises: a Universal Serial Bus (USB) kernel, configured to report a USB port and process basic USB commands in the boot phase; and a Small Computer Small Interface (SCSI) command processor, configured to perform the interaction between the data card and the terminal, report a mass storage device as a CD, and realize CD reading.

4. The method according to claim 3, wherein the reporting, to the terminal, the data card as a CD in the boot phase comprises: running the USB kernel to report a USB port to the terminal, running the SCSI command processor to report a mass storage device to the terminal, and interacting with the terminal by using SCSI commands to report the mass storage device as a CD.

5. A method for starting a data card, comprising:
in the boot phase, initializing a power-on startup module and a compact disk (CD) reporting and processing module, wherein the power-on startup module is a basic module configured to start a data card, and the CD reporting and processing module is configured to report a data card as a CD, interact with a terminal, and realize CD reading;
in the boot phase, reporting, to a terminal, the data card as a CD;
in the boot phase, receiving a port switching command sent by the terminal to the data card; and
in the network access phase, initializing user application modules and resources corresponding to a network access mode of the data card, and then switching the data card to the network access mode, wherein the user application modules comprises functional modules that perform the functions of a data card.

6. The method according to claim 5, wherein the method for initializing the power-on startup module and the CD reporting and processing module is to run the initalization functions corresponding to the power-on startup module and the CD reporting and processing module one by one in the boot phase.

7. The method according to claim 5 or 6, wherein the CD reporting and processing module comprises: a USB kernel, configured to report a Universal Serial Bus (USB) port and process basic USB commands in the boot phase; and a Small Computer Small Interface (SCSI) command processor, configured to perform the interaction between the data card and the terminal, report a mass storage device as a CD, and realize CD reading;
wherein the method for reporting, to the terminal, the data card as a CD in the boot phase comprises: running the USB kernel to report a USB port to the terminal, running the SCSI command processor to report a mass storage device to the terminal, and interacting with the terminal by using SCSI comands to report the mass storage device as a CD.

8. The method according to claim 5 or 6, further comprising: initializing a port switching command module in the boot phase, the port switching command module comprising a port switching command storage program configured to save a port switching command after receiving the port switching command from the terminal, wherein after receiving the port switching command, the data card runs the port switching command storage program to save the port switching command in the data card.

9. The method according to claim 8, wherein information about the network access mode of the data card is saved in the Flash memory of the data card; during the initializaiton in the network access phase, the network access mode is read from the Flash memory according to the port switching command, and the corresponding resources are initialized.

10. The method according to claim 5 or 6, wherein the sending, by the terminal, the port switching command to the data card comprises: if neither the driver nor the application of the data card is installed on the terminal, the terminal interacts with the data card to realize the installation of the driver and the application of the data card, and the installation program or application of the data card on the terminal sends a switching command to instruct the data card to switch to the network access mode; or
if the driver and the application of the data card are installed on the terminal, the installation program or application on the terminal sends a port switching command to instruct the data card to switch to the network access command.

11. A data card, comprising:
a boot unit, comprising a power-on startup module initialization function and a compact disk (CD) reporting and processing module initialization function, and configured to run both the initialization functions in the boot phase to initialize a power-on startup module and a CD reporting and processing module, wherein the power-on startup module is a basic module configured to start a data card, and the CD reporting and processing module is configured to run in the boot phase to report the data card as a CD to a terminal, interact with the terminal, and realize CD reading.

12. The data card according to claim 11, wherein the CD reporting and processing module comprises: a USB kernel, configured to realize reporting a USB port and processing basic USB commands in the boot phase; and a Small Computer Small Interface (SCSI) command processor, configured to perform the interaction between the data card and the terminal, report a mass storage device as a CD, and realize CD reading.

13. The data card according to claim 12, wherein the running, by the CD reporting and processing module, in the boot phase to report, to the terminal, the data card as a CD comprises: running the USB kernel to report a USB port to the terminal, running the SCSI command processor to report a mass storage device to the terminal, and interacting with the terminal by using SCSI commands to report the mass storage device as a CD.

14. The data card according to claim 11, wherein the boot unit further comprises a port switching command module initialization function and is configured to run the port switching command module initialization function in the boot phase to initialize a port switching command module, the port switching command module comprising a port switching command storage program is configured to, after receiving the port switching command from the terminal, run the port switching command storage program and save a port switching command in the data card after receiving the port switching command from the terminal.

15. The data card according to any one of claims 11 to 14, further comprising a network access unit, configured to switch the data card to a network access mode after the user application modules and the resources corresponding to the network access mode of the data card are initialized in the network access phase, wherein the user application modules comprises functional modules that perform the functions of the data card.
